# EUROPEAN PATENT SPECIFICATION

(11) **EP 1 907 241 B1**
(45) Date of publication and mention of the grant of the patent: **09.06.2010**
(21) Application number: 05775884.9
(22) Date of filing: 26.07.2005
(51) Int. Cl.: B60R 21/20, B60R 21/16

(54) **CURTAIN AIRBAG WITH MEANS FOR ASSURING ITS FIXING TO THE VEHICLE**
CURTAIN-AIRBAG MIT MITTELN ZUR GEWÄHRLEISTUNG SEINER BEFESTIGUNG AM FAHRZEUG
COUSSIN DE SECURITE GONFLABLE LATERAL AVEC DES MOYENS POUR ASSURER SA FIXATION SUR LE VEHICULE

(43) Date of publication of application: 09.04.2008
(73) Proprietor: Dalphi Metal España, S.A., 28006 Madrid (ES)
(72) Inventor: SANTÍN, Pedro, E-36213 Pontevedra (ES); SCHNEEWEISS, Philippe, E-36213 Pontevedra (ES)
(74) Representative: Mehnert, Bernhard
(86) International application number: PCT/EP2005/053625
(87) International publication number: WO 2007/012347

(56) References cited:
- EP-A- 1 464 549
- US-A1- 2005 052 001
- US-B1- 6 340 169
- US-B1- 6 412 810

## Description

### FIELD OF THE INVENTION

The present invention refers to a curtain airbag, and particularly to a curtain airbag for automotive vehicles incorporating means for fixing thereof to the vehicle.

### BACKGROUND OF THE INVENTION

Curtain airbags usually refer to those airbags which are deployed in parallel to the sides of a vehicle, from top to bottom, to protect the occupants therein against side impacts.

These curtain airbags serve to absorb side collisions.

Curtain airbags are usually fixed to the roof of the vehicle and when a side impact is detected, they receive the gas at one end or in the center of the bag from a generator allowing them to be quickly inflated so as to perform their function. Due to their location in the vehicle, curtain airbags usually need a flexible cover for containing the duly folded bag, unlike driver or passenger airbags which generally use rigid covers.

Curtain airbags with bags configured in different manners are known but many of them share some basic principles such as the demarcation of the inflatable areas in correspondence with the side windows of the vehicle and the fixing to the vehicle through lugs located on the top edge, intended for cooperating with different fixing means.

In this sense airbags are known which use screws as fixing means. With this screwed-down fixing, it can be checked that the fixing is well placed because it can be checked if the screwdriver has screwed in the screw, and the screwing torque and turn can further be controlled. The drawback of this fixing is that it is a solution in which a screw (weight increase) and thread (costly) must be arranged, and a great deal of time is consumed while screwing it in.

Airbags are also known which use clips as fixing means. The clip fixing is a fast, inexpensive and light solution, but it cannot be controlled that all the fixings are correctly positioned, which could lead to the vehicle roof headliners being arranged without having fixed all the clips. The present invention is aimed at solving this drawback.

US 6 412 810 B1 discloses a curtain airbag according to the preamble of claim 1.

### SUMMARY OF THE INVENTION

The present invention is generally applied to any curtain airbag comprising a bag in a cover with at least a cell that can be inflated by means of the gas supplied by a gas generator, the top edge of which includes a plurality of fixing areas, such as openings or lugs, cooperating with elements for fixing to the vehicle with clipping means and proposes that each fixing element has a U-shaped clip lock plate associated thereto.

According to the invention the fixing element with clipping means in openings provided for that purpose on the vehicle body and the safety plate are configured such that they can adopt two relative positions with one another:
- In a first position ("lock open"), the fixing element and the clipping lock plate are either separated or the clipping lock plate is preassembled on the fixing element, without the arms of the clipping lock plate having surpassed openings provided for that purpose on the vehicle body.
- In a second position ("lock closed"), the clipping lock plate assures that the clipping means of the fixing element are duly fixed in the vehicle body as a result of introducing its arms into the vehicle body and its clipping thereto by means of specific clipping means. To that end, the clipping lock plate shifts in relation to the fixing element and its clipping operation can occur only if the fixing element clipping operation, in which its clipping means surpass the openings provided for that purpose on the body, has also occurred.

The main advantages of the invention are the following:
- Quick fixing to the airbag.
- Single interface on the bag.
- Low weight compared to fixing with an integrated screw.
- Single interface in the body.
- 100% integrated fixing. No part or screw must be provided, nor does a thread have to be made in the vehicle.
- No tool is required for clipping of the module to the vehicle.
- Fixing clipped to the vehicle with the subsequent time savings.
- Correct assembly safety.
- Assured fixing of the airbag during module deployment.
- It allows assembly and removal of the module several times without requiring any tools.

Other features and advantages of the present invention will be understood from the following detailed description of an illustrative and by no means limiting embodiment of its object in relation to the attached drawings.

### DESCRIPTION OF THE DRAWINGS

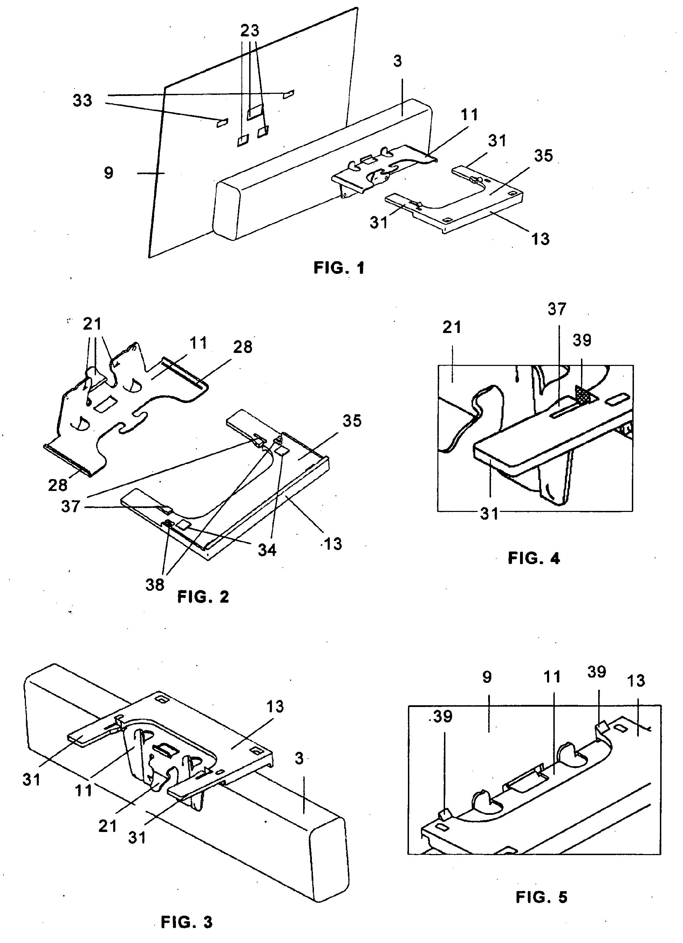

Figure 1 shows a schematic perspective view of a curtain airbag bag fixing element and a clipping lock plate according to the present invention.
Figure 2 shows a schematic perspective view of a fixing element and a clipping lock plate prior to being assembled.
Figure 3 shows a schematic perspective view of a fixing element and a clipping lock plate in the "closed lock" position.
Figures 4 and 5 show enlarged views of parts of the fixing element and the clipping lock plate in the "closed lock" position.
Figures 6a and 6b show side sectional views illustrating the fixing of a curtain airbag with a fixing element before clipping the clipping lock plate.
Figures 7a and 7b show schematic perspective views of the curtain airbag according to the present invention on both sides of the vehicle body in the "lock open" and "lock closed" positions, respectively.
Figures 8a and 8b show side sectional views illustrating the position of the clipping lock plate in relation to the vehicle headliner in the "lock open" and "lock closed" positions, respectively.

### DETAILED DESCRIPTION OF THE INVENTION

In the embodiment of the invention described below, the means used for fixing the airbag to the vehicle are fixing element 11 and clipping lock plate 13.

The fixing element 11 is joined to the bag 3 (shown schematically in the figures) and has clipping means 21, in particular a central clip and two ribs, in three openings 23 provided for that purpose in the vehicle body 9.

The U-shaped clipping lock plate 13 is formed by a body 35 and arms 31 intended for being introduced in openings 33 provided for that purpose in the vehicle body 9 and being fixed thereto by means of specific clipping means 37.

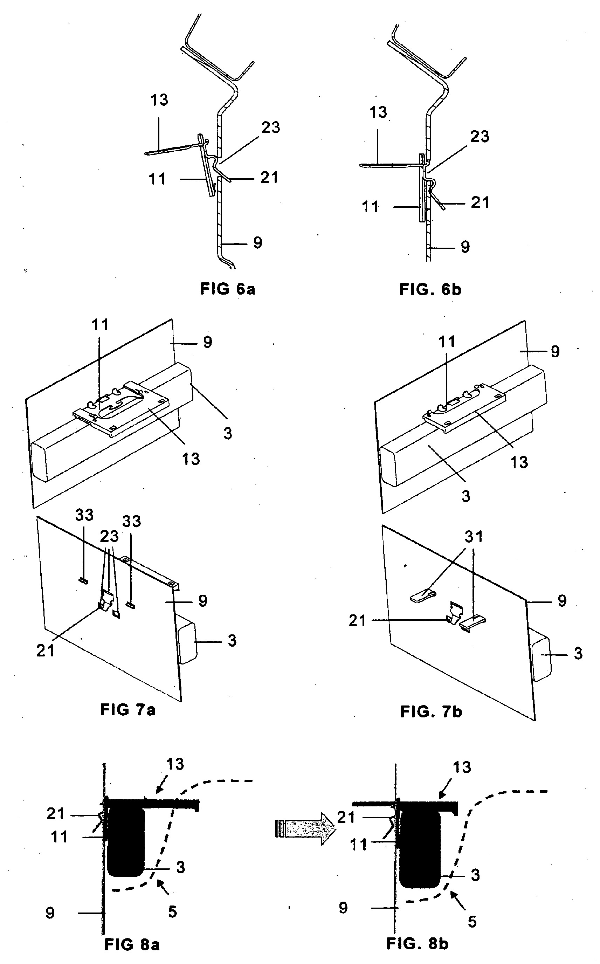

With these means the operation of fixing the airbag to the vehicle is carried out by means of the following steps:
- When the airbag reaches the vehicle assembly line the fixing element 11 is clipped to the vehicle body 9 as shown in figures 6a and 6b. If the fixing element 11 is not clipped, it is not possible to assemble the clipping lock plate 13 because it is not correctly positioned to do so. The clipping lock plate 13 can be supplied separately from the fixing element 11 or preassembled on it by means of the cooperation of the guides 28 of the fixing element 11 and the counter-guides 38 of the clipping lock plate 13.
- Then the clipping lock plate 13 is shifted on the fixing element 11 introducing its arms 31 in to opening 33, as shown in Figures 7a and 7b. It is thus assured that vehicle assembly may continue because otherwise assembly of the vehicle headliner 5, as shown in Figures 8a and 8b, is prevented. For its part, if the clipping lock plate 13 were introduced without having clipped the fixing element 11, the assembly would fall because the surface of the vehicle where the airbag is assembled is usually tilted and because if the fixing element 11 is not clipped, it is impossible to clip the clipping lock plate 13.

The arrangement of the fixing element 11 and the clipping lock plate 13 is such that:
- The clipping lock plate 13 shifts on the fixing element 11, its arms being introduced in the openings 33 until the stops 39 reach the body 9.
- When the "lock closed" position has been reached it is impossible to return to the "lock open" position because the clipping means 37 of the clipping lock plate 13 prevents this.
- The clipping lock plate 13 includes ribs 34 causing there to be no relative movement between the plate and the fixing element 11 in the "lock open" position, and causing it to be tensed in the "lock closed" position such that no noise is produced due to vibration.

The fixing element 11 must allow the clipping so it must be provided with flexibility and at the same time it must be a resistant part since it supports the bag 3 during airbag deployment.

The clipping lock plate 13 must have sufficient rigidity so as to be able to prevent assembly of the vehicle headliner 5 when it is not in the closed position.

The fixing element 11 and the clipping lock plate are made from a suitable metal (steel, aluminum, magnesium), alloys or plastic.

Although an embodiment of the invention has been described and represented, it is obvious that modifications comprised within the scope thereof can be introduced, not considering it to be limited to said embodiment but to the content of the following claims.

## Claims

1. A curtain airbag for vehicles comprising a bag (3) in a cover with at least a cell that can be inflated by means of the gas supplied by a gas generator when the vehicle is involved in a collision, the top edge of which includes a plurality of fixing areas cooperating with a fixing element (11) with clipping means (21) for fixing the airbag to the vehicle body (9) in openings (23) provided for that purpose, also comprising for each fixing element (11) a U-shaped clipping lock plate (13) with a body (35) and arms (31), the fixing element (11) and the clipping lock plate (13) configured such that the clipping lock plate (13) can be shifted in relation to the fixing element (11), its arms (31) surpassing openings (33) provided for that purpose on the vehicle body (9) and assuring that the clipping means (21) of the fixing element (11) have also surpassed the openings (23), the arms (31) of the clipping lock plate (13) including clipping means (37) in vehicle body (9)
**characterized in that**
the clipping lock plate (13) includes stops (39) for demarcating the portion of the arms (31) intended for surpassing the openings (33).

2. A curtain airbag for vehicles according to claim 1, **characterized in that** the body (35) of the clipping lock plate (13) includes ribs (34) for keeping it tensed when it is clipped to the body (9).

3. A curtain airbag for vehicles according to any of the previous claims, **characterised in that** the fixing element (11) includes guides (28) and the clipping lock plate (13) includes counter-guides (38) to facilitate said shifting and to allow preassembly of the clipping lock plate (13) on the fixing element (11).

## Patentansprüche

1. Vorhang-Airbag für Fahrzeuge mit einem Sack (3) in einer Abdeckung mit mindestens einer Zelle, welche durch das von einem Gasgenerator gelieferte Gas aufblasbar ist, wenn das Fahrzeug an einem Zusammenstoß beteiligt ist, wobei dessen Oberkante mehrere Befestigungsbereiche umfasst, welche mit einem Befestigungselement (11) mit Klemmmitteln (21) zur Befestigung des Airbags am Fahrzeugaufbau (9) in hierzu vorgesehenen Öffnungen (23) zusammenwirkt, sowie mit einer U-förmigen Klemmverschlussplatte (13) mit einem Hauptteil (35) sowie Armen (31) für jedes Befestigungselement (11), wobei das Befestigungselement (11) und die Klemmverschlussplatte (13) derart ausgebildet sind, dass die Klemmverschlussplatte (13) relativ zu dem Befestigungselement (11) verschoben werden kann, wobei deren Arme (31) über zu diesem Zweck an dem Fahrzeugaufbau (9) vorgesehene Öffnungen (33) hinaus ragen und sicherstellen, dass die Klemmmittel (21) des Befestigungselementes (11) auch über die Öffnungen (23) hinaus ragen, wobei die Arme (31) der Klemmverschlussplatte (13) Klemmmittel (37) in dem Fahrzeugaufbau (9) aufweisen,
**dadurch gekennzeichnet, dass**
die Klemmverschlussplatte (13) Anschläge (39) zur Abgrenzung des Abschnittes der Arme (31) aufweist, der über die Öffnungen (33) hinaus ragen soll.

2. Vorhang-Airbag für Fahrzeuge gemäß Anspruch 1, **dadurch gekennzeichnet, dass** der Hauptteil (35) der Klemmverschlussplatte (13) Rippen (34) aufweist, um diese gespannt zu halten, wenn sie an den Aufbau (9) geklemmt wird.

3. Vorhang-Airbag für Fahrzeuge gemäß einem der vorhergehenden Ansprüche, **dadurch gekennzeichnet, dass** das Befestigungselement (11) Führungen (28) umfasst und die Klemmverschlussplatte (13) Gegen-Führungen (38) umfasst, um die Verschiebung zu vereinfachen und eine Vormontage der Klemmverschlussplatte (13) an dem Befestigungselement (11) zu ermöglichen.

## Revendications

1. Un coussin gonflable latéral de type rideau pour véhicules comprenant un sac (3) dans un couvercle avec au moins une cellule qui peut être gonflée au moyen de gaz fournit par un générateur de gaz lorsque le véhicule est impliqué dans une collision, l'arête supérieure de celui-ci inclut une pluralité de zones de fixation coopérant avec un élément de fixation (11) avec des moyens de clipsage (21) pour fixer le coussin gonflable sur la structure du véhicule (9) dans des ouvertures (23) fournies à cette intention, comprenant aussi pour chaque élément de fixation (11) une plaque de verrouillage clipsable en forme de U (13) avec un corps (35) et des bras (31), l'élément de fixation (11) et la plaque de verrouillage clipsable (13) configurés de telle sorte que la la plaque de verrouillage clipsable (13) puisse être glissée par rapport à l'élément de fixation (11),
ses bras (31) dépassant les ouvertures (33) prévues à cet effet sur la structure du véhicule (9) et assurant que les moyens de clipsage (21) de l'élément de fixation (11) ont aussi dépassé les ouvertures (23),
les bras (31) de la plaque verrouillage clipsable (13) incluant des moyens de clipsage (37) à la structure du véhicule (9)
**caractérisés par le fait que**
la plaque verrouillage clipsable (13) inclut des arrêts (39) délimitant la portion des bras (31) prévue pour dépasser les ouvertures (33).

2. Un coussin gonflable latéral de type rideau pour véhicules selon la revendication 1, **caractérisé par le fait que** le corps (35) de la plaque de verrouillage clipsable (13) comprend des renforts (34) pour la garder sous tension lorsqu'elle est clipsée au corps (9).

3. Un coussin gonflable latéral de type rideau pour véhicules selon l'une des revendications précédentes, **caractérisé en ce que** l'élément de fixation (11) inclut des guides (28) et que la plaque de verrouillage clipsable (13) inclut des contre-guides (38) pour faciliter le dit glissement et permettre le pré-assemblage de la plaque de verrouillage clipsable (13) sur l'élément de fixation (11).
